# EUROPEAN PATENT APPLICATION

(11) **EP 3 614 489 A1**
(43) Date of publication of application: **26.02.2020**
(21) Application number: 19190654.4
(22) Date of filing: 08.08.2019
(51) Int. Cl.: H01Q 1/12, E04H 12/08, E04H 12/20, F16B 7/04, F16B 7/18

(54) **CONNECTOR AND REINFORCEMENT SYSTEM FOR SUPPORT POLES FOR AERIALS**

(30) Priority: 22.08.2018 IT 201800008160
(71) Applicant: Vodafone Italia S.p.A., 10015 Ivrea (TO) (IT); Vodafone IP Licensing Limited, Newbury, Berkshire RG14 2FN (GB)
(72) Inventor: Piccirillo, Francesco, 80131 Napoli NA (IT); Rinauro, Roberto, 80136 Napoli NA (IT); Draghi, Bonifazio, 28100 Novara NO (IT)
(74) Representative: Perani & Partners S.p.A.

(57) **Abstract**

A connector for fixing at least one group of rods to a slimline structure, which develops along a longitudinal direction, comprises at least two plates fixable to the slimline structure, each of which comprises fixing holes and at least one coupling hole, first fixing means operatively associated with the fixing holes and configured to fix each plate of the connector stably to the slimline structure, and furthermore it comprises second fixing means operatively associated with the coupling holes and with the rods of the group of rods and configured to keep the rods angularly spaced apart, each second fixing means is configured to constrain one end of a rod to the plates preventing translational movements of the rod along directions perpendicular to the longitudinal direction along the longitudinal direction itself.

## Description

### Technical field

The present invention relates to a connector for fixing at least one group of rods to a slimline structure and a reinforcement system for aerial support poles.

In particular, according to the present invention, the connector and reinforcement system are used in the field of telecommunications.

### Background

A support apparatus for aerials comprising a slimline structure developed in height from a base element is known from the state-of-the-art.

Such support apparatuses for aerials are positioned in different geographical sites. In particular, in an urban context, support apparatuses are positioned on the roofs of buildings in a solution called "Roof Top".

The slimline structure presents itself as a single piece or as a composition of several structural elements, which are overlapping and joined by means of flanges, obtained at the ends of the same structural elements. The slimline structure develops longitudinally and a support device for aerials is mounted on the top thereof.

Such support apparatuses are usually reinforced by a plurality of stays and/or tie-rods, which allow the distribution of mainly flexural structural loads, to which the slimline structure is subjected.

Some examples of support apparatuses for aerials of the known type are described in documents ITMI20130900 A1, KR101340625 B1 and US 7253786 B1.

### Problem of the Prior Art

Disadvantageously, the support apparatus is not capable of sustaining an unexpected load, due to the assembly of new aerials without replacing the slimline structure.

In particular, the types of reinforcement linked to stays and/or tie-rods need a wide hooking area so as to distribute the flexural stresses to which the slimline structure is subjected.

Furthermore, the types of known reinforcements do not provide a structural reinforcement with longitudinal loads linked to the increase in weight of the aerials mounted without occupying a vast area.

Disadvantageously, replacing the slimline structure would mean elevated costs and longer times for mounting new aerials.

### Object of the Invention

In this context, the technical task underlying the present invention, is to propose a connector and a reinforcement system for aerials, which overcome the drawbacks of the above prior art.

In particular, it is an object of the present invention to provide a connector and a reinforcement system for aerials capable of allowing a redistribution of the stresses on the slimline structure and a structural reinforcement on the same.

The technical task set out and the specified objects are substantially achieved by a group of rods constrained to the slimline structure and to the base element by means of connectors comprising the technical features in one or more of the accompanying claims.

### Advantages of the Invention

The object of the present invention is a connector for fixing at least one group or rods to a slimline structure, which develops along a longitudinal direction.

Such connector comprises at least two plates fixable to the slimline structure. Each plate comprises fixing holes and at least one coupling hole. The connector further comprises first fixing means, which are operatively associated with the fixing holes and they are configured to fix each plate of the connector stably to the slimline structure. The connector also comprises second fixing means operatively associated with the coupling holes and with the rods of the group of rods. More specifically, the second fixing means are configured to keep the rods angularly spaced apart and to constrain one end of a rod to the plates preventing translational movements of the rod along directions perpendicular to the longitudinal direction and along the longitudinal direction itself.

Such connector according to the present invention overcomes the technical problem relating to the structural reinforcement as it allows the rods to be connected to the slimline structure so as to distribute the loads of new aerials mounted on the support devices. In particular, the rods can be mounted on pre-existing structures by making minimal changes to the slimline structure.

Advantageously, the structural reinforcement provided by the rods guarantees a valid low-cost alternative to replacing the entire support system.

Advantageously, the rods involve a circumscribed area around the slimline structure.

Advantageously, the rods also guarantee a reinforcement with flexural loads.

### BRIEF DESCRIPTION OF THE DRAWINGS

Further characteristics and advantages of the present invention will become more apparent from the approximate and thus non-limiting description of a preferred, but non-exclusive, embodiment of a connector and a reinforcement system for aerials, as illustrated in the accompanying drawings, wherein:
- Figure 1 is a front view of the reinforcement system according to one embodiment of the present invention;
- Figure 2 is a front view of the reinforcement system according to a second embodiment;
- Figure 3 is a front view of the reinforcement system according to a third embodiment;
- Figure 4 is a front view of the reinforcement system according to a fourth embodiment;
- Figure 5a is a view from above of a detail of the system according to the embodiment in Figure 1;
- Figure 5b is a view from above of a detail of the system according to the embodiment in Figure 2;
- Figure 5c is a view from above of a detail of the system in a possible configuration according to the embodiment in Figure 3 or 4;
- Figure 5d is a view from above of a detail of the system in a possible configuration according to the embodiment in Figure 3 or 4;
- Figure 6 is a side view of a part of the system according to the embodiment in Figure 1;
- Figure 7 is a side view of a part of the system according to the embodiment in Figure 2;
- Figure 8a is a view of an element of the system according to the embodiment in Figure 1 and 3;
- Figure 8b is a view of an element of the system according to the embodiment in Figure 1 and 3;
- Figure 8c is a view of an element of the system according to the embodiment in Figure 1 and 3;
- Figure 9a is a view of an element of the system according to the embodiment in Figure 2 and 4;
- Figure 9b is a view of an element of the system according to the embodiment in Figure 2 and 4;
- Figure 9c is a view of an element of the system according to the embodiment in Figure 2 and 4;
- Figure 10 is a side view of a part of the system according to the embodiment in Figure 3;
- Figure 11 is a side view of a part of the system according to the embodiment in Figure 4;
- Figure 12a are views from above of a detail of the system in possible configurations according to the embodiment in Figure 3;
- Figure 12b are views from above of a detail of the system in possible configurations according to the embodiment in Figure 3;
- Figure 12c are views from above of a detail of the system in possible configurations according to the embodiment in Figure 4;
- Figure 12d are views from above of a detail of the system in possible configurations according to the embodiment in Figure 4;
- Figure 13a is a view from above of a detail of the system according to the embodiment in Figure 3;
- Figure 13b is a view from above of a detail of the system according to the embodiment in Figure 4.

### DETAILED DESCRIPTION

Even when not explicitly highlighted, the individual features described with reference to the specific embodiments must be considered as accessories and/or exchangeable with other features, described with reference to other embodiments.

With reference to the attached figures, a reinforcement system for aerial support poles is denoted with 100.

The reinforcement system 100 comprises a support apparatus 1, at least one group of rods 20 and at least one connector 50.

The reinforcement system 100 is configured to connect at least one group of rods 20 to the support apparatus 1 providing a structural support for the support apparatus 1 itself.

In particular, the reinforcement system 100 partially redistributes, on the group of rods 20 connected to the ground, the stresses, which the support apparatus 1 receives from the outside.

More specifically, the reinforcement apparatus 100 is preferably configured to retain several groups of rods 20 overlapping longitudinally and parallel to the support apparatus 1.

Even more specifically, the reinforcement apparatus 100 is configured to retain the groups of rods 20 connected to one another all at a predetermined distance D from the support apparatus 1.

The support apparatus 1 comprises a base element 3 stably fixed to the ground or to the roof of a building.

Such base element 3 is preferably made of cement, but it can also be made of materials known to an expert in the field and will not be further discussed in this paper.

The support apparatus 1 further comprises a slimline structure 2.

Such slimline structure 2 develops along a longitudinal direction X-X substantially perpendicular to the base element 3.

In particular, the slimline structure 2 develops between a first free end 4 and a second end 5, opposite the first 4 rigidly constrained to the base element 3.

The slimline structure 2 has a varying height H based on the type of aerials mounted or based on the geographical location where the system 100 is positioned.

According to a preferred embodiment of the present invention such height H is substantially eight and a half metres.

At least one support device 7 is preferably mounted at the first end 4 of the slimline structure and it is configured to sustain one or more aerials. Such support device is known to an expert in the field and not discussed further.

The slimline structure 2 has a substantially cylindrical side surface 6. In embodiments not shown in the figures, such side surface 6 can have different shapes, for example, a truncated cone or polygonal based prismatic shape.

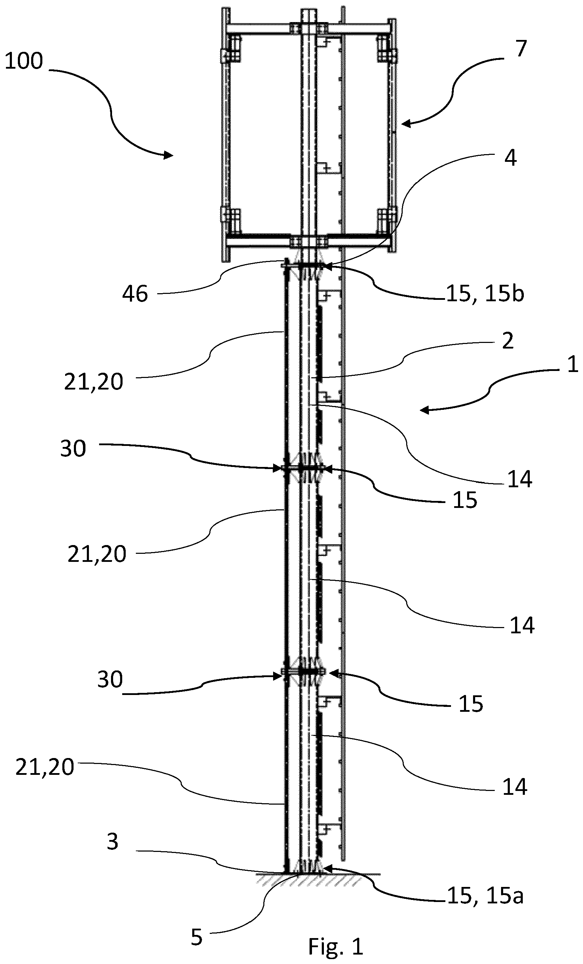

The slimline structure 2, as shown in figure 1, comprises a plurality of flanges 15 arranged longitudinally along the slimline structure 2.

The flanges 15 preferably develop in a cantilever fashion from the slimline structure 2 surrounding the slimline structure 2 itself in a continuous manner.

The flanges 15 have a plurality of through holes 16. In particular, each flange comprises proximal holes 16a at the slimline structure 2 and, optionally, distal holes 16b spaced apart from the slimline structure 2, preferably by the distance D, along a direction perpendicular Y-Y to the longitudinal direction X-X.

More specifically, the slimline structure 2 preferably comprises only one base flange 15a placed at the second end 5 and preferably only one final flange 15b placed at the first free end 4. The slimline structure 2 comprises further central flanges 15c between the base flange 15a and the final flange 15b. Preferably, the flanges 15 are equally distributed along the slimline structure.

According to a preferred embodiment of the present invention, the slimline structure 2 is made of several tubular structural elements 14 having a substantially equal length. Such structural elements 14 are joined to one another in connection points by means of flanges 15 obtained at the ends of each structural element 14. Such structural elements 14, which are longitudinally overlapping along the direction X-X are rigidly fixed to one another at the flanges 15. Furthermore, at least one structural element 14 is rigidly constrained to the base element 3.

With particular reference to figures 1-4, the support system 100 comprises at least one group of rods 20 rigidly constrained to the base element 3 and coupled to at least one flange 15. Such group of rods 20 is configured to provide structural reinforcement for the slimline structure 2.

Advantageously, the group of rods 20 connected to the slimline structure 2 transfers and redistributes the stresses, which the slimline structure 2 receives from the outside or from the weight itself of the aerials.

The reinforcement system 100 preferably comprises at least three groups of rods 20 overlapping one another along the longitudinal direction X-X and fixed stably to the slimline structure 2.

The groups of rods 20 are connected to one another and also to the slimline structure 2 at the central flanges 15c. The overlapping of the groups of rods 20 extends between the first 4 and the second end 5 of the slimline structure 2 surrounding the side surface 6.

More specifically, a first group of rods 20 is also fixed to the base element 3 at the second end 5 of the slimline structure 2 and a final group of rods 20 is also fixed to the slimline structure 2 at the first end 4.

Each group of rods 20 comprises a plurality of rods 21, preferably three. The rods 21 are fixed to the slimline structure 2 at the free ends thereof 21a, 21b.

More specifically, each rod 21 of the group of rods 20 develops longitudinally X-X along the slimline structure 2 and is kept substantially parallel to the same.

In particular, each rod 21 is spaced apart from the slimline structure 2 along a direction perpendicular Y-Y to the longitudinal direction X-X of the predetermined value D. According to the preferred embodiment of this invention the value D is about 25 cm. In particular, the structural reinforcement is a function of the distance D.

More specifically, each rod 21 of each group 20 preferably has the same length Hs. The number of groups of rods 20 is linked to the height H of the slimline structure 2 and to the weight of the aerials, which the system 100 has to support.

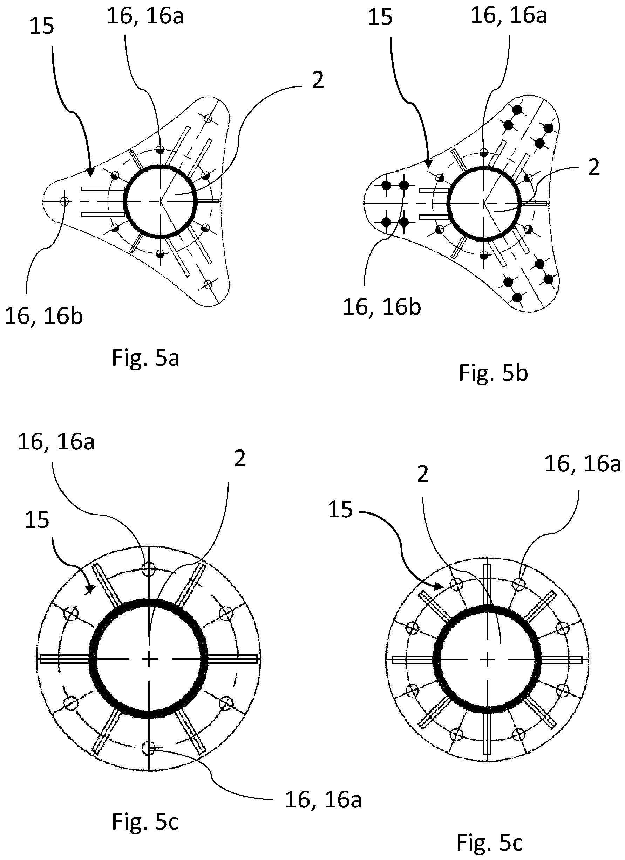

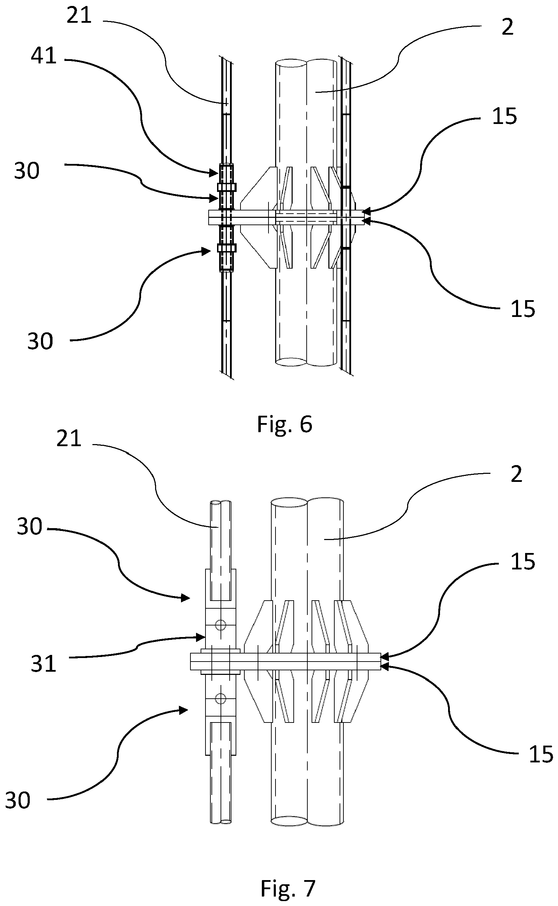

With particular reference to figures 1-2, 5a-5b and 6-7, the groups of rods 20 are connected directly to the flange 15 of the slimline structure 2. In particular, in the preferred embodiment, the three groups of overlapping rods 20 are connected to one another and to the flanges 15 of the slimline structure 2 at the ends of the rods 21a, 21b.

In particular, the support apparatus 1 comprises coupling means 30 configured to constrain the free ends 21a, 21b of the rods 21 to the flanges 15 and keep the rods 21 parallel to the slimline structure 2.

More specifically, each coupling means 30 constrains one free end 21a, 21b of a rod 21 to prevent translational movements of the rod 21 along directions perpendicular to the longitudinal direction X-X and along the longitudinal direction X-X itself.

Preferably, the coupling means 30 are similarly spaced apart on each flange 15 so as to keep the rods 21 angularly spaced apart from one another.

More specifically, the coupling means 30 are configured to connect the rods 21 to one another and keep them at the distance D from the structure itself.

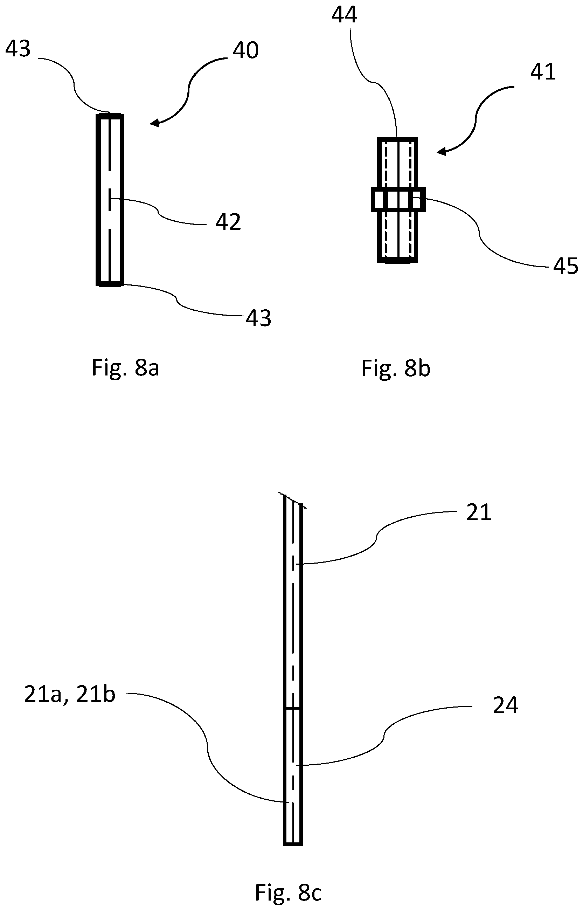

In a first example of a direct connection relating to the present invention, reported in figures 1, 5a, 6, 8a, 8b and 8c, the coupling means 30 comprise a plurality of threaded pins 40 coupled to the flanges 15 and extended along the longitudinal direction X-X and a plurality of sleeves 41 configured to connect the rods 21 to the flanges 15 by means of the threaded pins 40. According to the present embodiment, each flange 15 is coupled to at least three threaded pins 40 and three sleeves 41.

Each threaded pin 40 is inserted into a distal hole 16b of the flange 15 and has a central part 42 constrained to the flange 15 and two free ends 43 on opposite sides with respect to the flange 15. Each sleeve 41 has a cavity 44, which is at least partially threaded, configured to be coupled to a free end 43 of each pin 40 and to one end of a rod 21a, 21b. Preferably, the cavity 44 of the sleeve 41 is a through cavity.

More specifically, each sleeve comprises a screwing element 45 preferably with a polyhedral section, configured to facilitate the screwing, by an operator, of the sleeve 41 onto the respective threaded pin 43 and onto the respective end of the rod 21a, 21b.

The cavity 44 of each sleeve 41, which is partially threaded, is configured to make a screw-nut coupling with the outer thread 24 of one end 21a, 21b of a rod 21 and with a pin 40 coupled to the flange 15.

According to a preferred embodiment of a direct connection, the threaded pins 40 connect the adjacent flanges 15 of two overlapping structural elements 14 through the distal holes 16b of the respective flanges 15.

In particular, the distal holes 16b of the flanges 15 are aligned along the longitudinal direction X-X, so each threaded pin 40, passing through the distal holes 16b of the adjacent flanges 15 of the two overlapping structural elements 14 has a free end 43 extended towards the first end 4 and the other free end 43 extended towards the second end 5 of the slimline structure 2.

Even more specifically, the threaded pins 40 fixed at the base element 3 have one end 43 preferably fixed to the base element 3 and the other end 43 extended towards the first end 4 of the slimline structure 2.

The threaded pin 40 fixed at the first end 4 of the slimline structure 2 has one end 43 fixed to the flange 15 preferably through a locking element 46 and the other end 43 developed towards the second end 5 of the slimline structure 2.

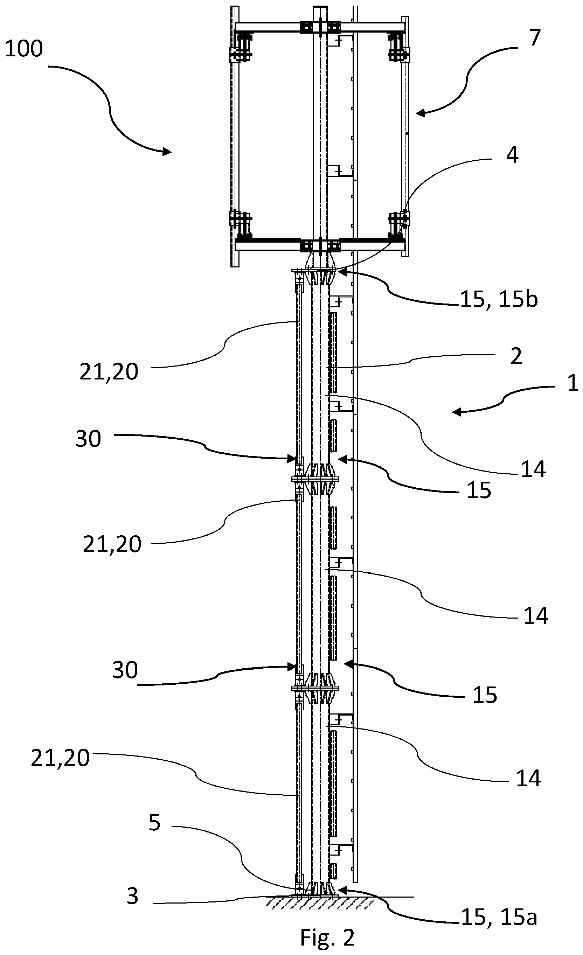

In a second example of a direct connection relating to the present invention, reported in figures 2, 5b, 7, 9a, 9b and 9c, the coupling means 30 comprise a plurality of retaining elements 31 fixed to the flanges 15. According to the present embodiment, each flange 15 comprises at least three retaining elements 31.

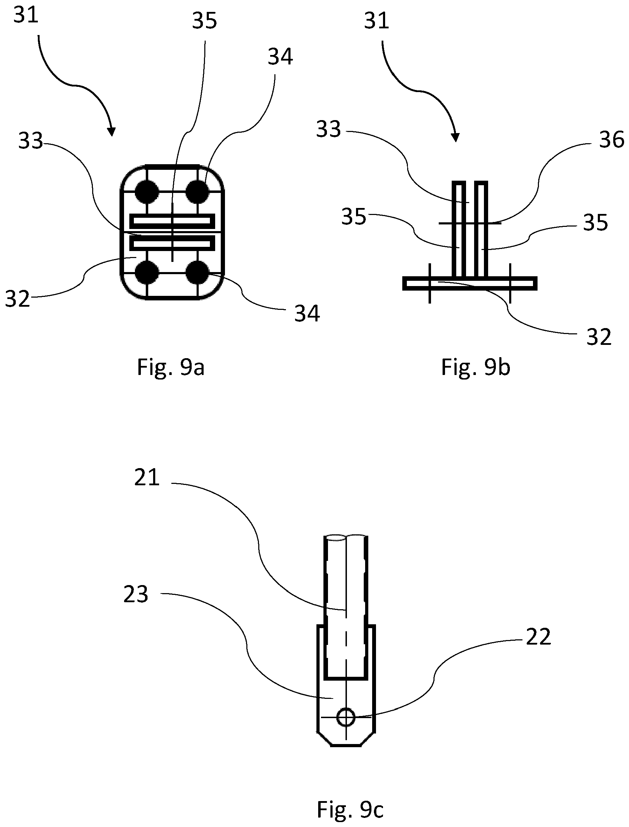

In particular, each retaining element 31, as shown in figure 9a and 9b, comprises a base 32 configured to be coupled to a flange 15 and a housing 33 configured to be coupled to the end of a rod 21a, 21b.

The base 32 of the retaining element 31 has at least one hole 34 operatively associated with at least one distal hole 16b of a flange 15, preferably through a system of bolts, not shown.

Preferably, the base 32 of the retaining element 31 comprises a plurality of holes 34 associated with respective distal holes 16b of the flange 15.

The housing 33 is defined by two walls 35 protruding from the base 32 along the longitudinal direction X-X and facing each other. The walls 35 each have a hole 36 in the same position.

In particular, the housing 33 is configured to be coupled to a tongue 22 having a hole 23 obtained at the free end 21a, 21b of each rod 21 according to the present embodiment, figure 9c. The tongue 22 is welded to the end 21a, 21b of the rod 21 or obtained in a single piece from the rod 21 itself.

More specifically, the perforated tongue 22 of a rod 21 is inserted between the two walls 35 and fixed to the retaining element 31 preferably by means of a bolt, which couples the holes 36 of the walls 35 to the hole 23 of the tongue 22.

According to a preferred embodiment of a direct connection, the retaining elements 31 connect the flanges 15 of the structural elements 14 at the overlapping thereof through the distal holes 16b of the flanges 15.

In particular, the distal holes 16b of the flanges 15 are aligned along the longitudinal direction X-X, thus, the retaining elements 31 associated with the central flanges 15c are connected to one another through the distal holes 16b and fixed to the flanges 15c by means of bolts.

More specifically, the retaining elements 31 associated with the flange 15 of the structural element 14 close to the base element 3 extend towards the second end 5 while the retaining elements 31 associated with the flange 15 of the structural element 14 adjacent to the structural element 14 below extend towards the first end 4.

Even more specifically, the retaining elements 31 fixed at the base element 3 to the slimline structure extend towards the first end 4 while the retaining elements 31 fixed to the final flange 15b extend towards the second end 5.

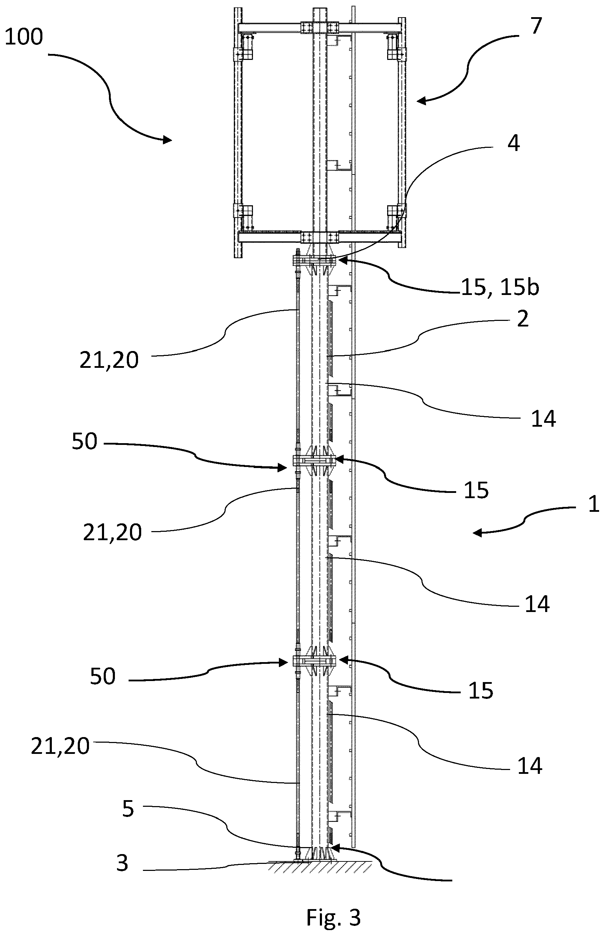

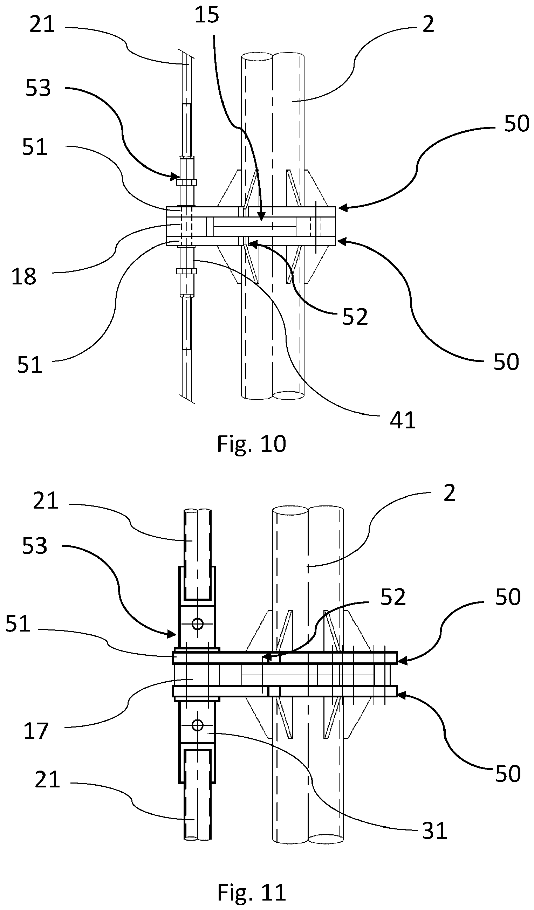

According to a further preferred embodiment in particular shown in figures 3, 4, 10, 11 the groups of rods 20 are connected indirectly to the flanges 15 of the slimline structure 2 by means of a plurality of connectors 50.

Each connector 50 is configured to fix at least one group of rods 20 to the slimline structure 2 so as to keep them substantially parallel to the slimline structure 2 itself.

More specifically, the plurality of connectors 50 is coupled to the rods 21 to keep them angularly spaced apart from one another. Such connectors 50 are arranged spaced apart longitudinally along the slimline structure 2 and fixed to the slimline structure 2.

Even more specifically, the connectors 50 are made of steel or aluminium. Furthermore, the connectors 50 can be made of reinforced composite materials with carbon fibres or glass, ceramic or aramid fibres.

In particular, the connectors 50 keep the rods 21 at the ends of the same 21a, 21b along the slimline structure 2.

Preferably, the plurality of connectors 50 connects several groups of overlapping rods 20 along the longitudinal direction X-X to the slimline structure 2.

Each connector 50 comprises at least two plates 51, first fixing means 52 and second fixing means 53.

Preferably, the connectors 50 are arranged so that the coupling means 53 for the rods 21 are aligned along the slimline structure 2, forming a substantially longitudinal guide for the rods 21.

The plates 51 of each connector surround the outer surface 6 of the slimline structure 2 at each flange 15.

Such plates 51 are fixable to the slimline structure 2. In particular, the plates 51 of the connectors 50 are fixed to the flanges 15 of the slimline structure 50. Preferably, the plates 51 fixed to the flanges 15 extend in a cantilever fashion from the flanges 15 along a direction perpendicular to the longitudinal direction X-X.

Each plate 51 of the connector 50 comprises fixing holes 54 and at least one coupling hole 55 configured to be coupled to the second fixing means 53. Preferably, the coupling holes 55 are angularly spaced apart.

The first fixing means 52 operatively associated with the fixing holes 54 are configured to fix each plate 51 of the connector 50 stably to the slimline structure 2.

More specifically, the first fixing means 52 preferably comprise a plurality of bolts configured to be coupled to the proximal holes 16a of the flanges 15 and to the fixing holes 54 of the plates 51.

The coupling holes 55 of the plates 51 of the connectors 50 are at a predetermined distance D from the slimline structure 2 so as to space the rods 21 apart along a direction perpendicular to the longitudinal direction X-X.

Preferably, the coupling holes 55 are obtained on the plates 51 so that the second fixing means 53 are fixed to the plates 51 to keep the rods 21 angularly equally spaced apart from one another.

The groups of rods 20 according to the present invention preferably comprise at least three rods 21.

More specifically, the rods 21 are preferably arranged at 120° from one another. The number of rods 21 per group 20 can vary depending on the support requested for the system 100.

The second fixing means 53 of each connector 50 are operatively associated with the coupling holes 55 of the plates 51 and with the rods 21 of the group of rods 20.

The second fixing means 53 are configured to constrain one end of a rod 21a, 21b to the plates 51 preventing translational movements of the rod along directions perpendicular Y-Y to the longitudinal direction X-X and along the longitudinal direction X-X itself.

More specifically, the second fixing means 53 are arranged on the plates 51 angularly spaced apart so as to keep the rods also angularly spaced apart.

The second fixing means 53 of the connectors 50 associated with each flange are aligned along the slimline structure 2 to ensure that the retained rods 21 perform the smallest number of movements possible about the longitudinal direction thereof X-X and along the longitudinal direction X-X itself.

Advantageously, the rods 21 retained by the second fixing means 53 are connected to one another through the flanges 15 allowing the structural load to be distributed.

The central flanges 15c comprise two connectors 50 fixed on opposite sides of the same flange 15 to connect two groups of overlapping rods 20 to one another.

In particular, one connector 50, associated with the central flanges 15c, has the second fixing means 53 extended towards the first end 4 of the slimline structure 2 and the other connector 50 has the second fixing means 53 extended towards the second end 5 of the slimline structure 2.

The reinforcement system 100 comprises a plurality of spacer elements 17, 18 configured to connect two connectors 50, which are at least partially facing and fixed on opposite sides of the same flange 15.

More specifically, such spacer elements 17, 18 are positioned between the plates 51 of the two connectors 50 associated with the same flange 15 at the coupling holes 55 of the facing and aligned plates 51.

More specifically, each spacer element 17, 18 is positioned at the second fixing means 53 fixed on the two connectors 50 respectively on opposite sides and aligned along the longitudinal direction X-X.

Even more specifically, each spacer element 17, 18 is operatively associated with two rods 21 of two groups of rods 20 overlapping one another along the longitudinal direction X-X. The spacer elements 17, 18 connect the two connectors 50 and the rods 21 to the respective second fixing means 53.

Advantageously, the groups of rods 20 connected to one another by means of the spacer elements 17, 18 and connected to the slimline structure 2 by means of connectors 50 provide a structural reinforcement redistributing the loads.

Advantageously, the plates 51 of the two connectors 50, fixed to the same flange 15, are connected to each other by means of a spacer element 17, 18 allowing the stresses to be transferred from the rods 21 close to the first end 4 of the slimline structure 2 to the base element 3.

To simplify the presentation below, each central flange 15c, a composition of the flanges 15 at the ends of two structural elements 14 overlapping each other and stably constrained according to a preferred embodiment, shall be considered a single flange 15

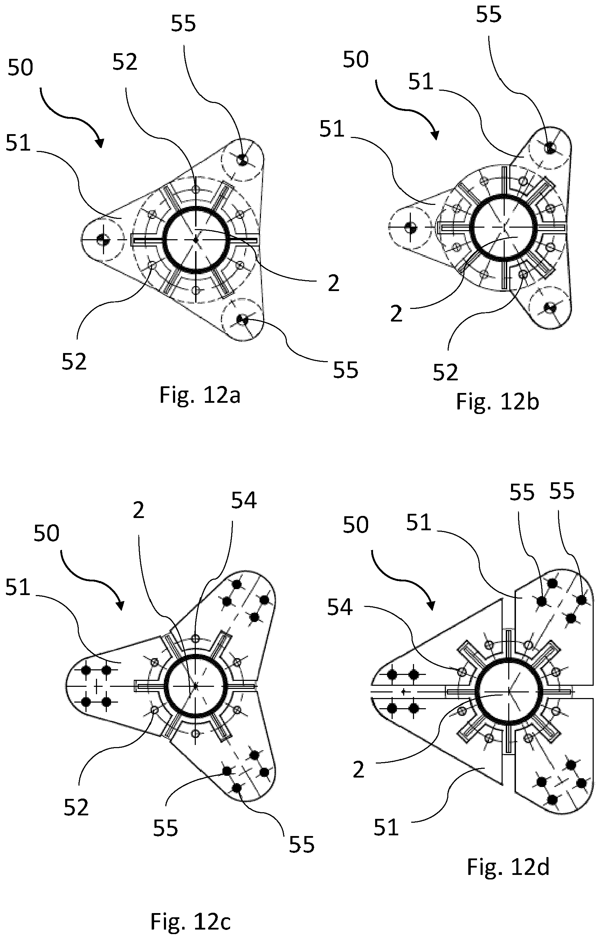

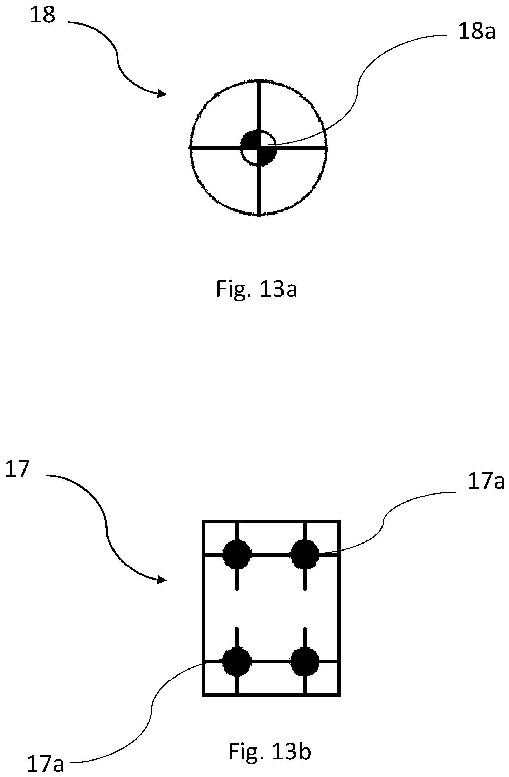

According to a first example of an indirect connection of the rods 21 to the flanges 15 relating to the present invention, reported in figure 3, 5c, 5d, 8a, 8b, 8c, 10, 12a, 12b and 13a, the second fixing means 53 of each connector comprise a plurality of threaded pins 40 coupled to the coupling holes 55 and a plurality of sleeves 41 configured to connect the rods 21 to the connector 50 by means of the threaded pins 40. According to the present embodiment, each connector 50 is coupled to at least three threaded pins 40 and three sleeves 41.

In particular, each threaded pin 40, extended along the longitudinal direction X-X is inserted into a respective coupling hole 55 and has a central part 42 constrained to the plate 51 and two free ends 43, on opposite sides with respect to the plate 51.

Each sleeve 41 has a cavity 44, which is at least partially threaded, configured to be coupled to a free end of each pin 40 and to one end of a rod 21a, 21b.

More specifically, the cavity 44 of each sleeve 41, which is at least partially threaded, is configured to make a screw-nut coupling to the outer thread of a respective rod 21 at the end 21a, 21b and to a pin 40. Preferably, the cavity 44 of the sleeve 41 is a through cavity.

According to a preferred embodiment of an indirect connection the threaded pins 40 connect two connectors 50 fixed to one same central flange 15c by means of the spacer elements 17. In particular, each spacer element 18 has a threaded through hole 18a configured to be coupled to the central part 42 of the threaded pin 40 by means of a screw-nut coupling.

According to a preferred embodiment each connector 50 comprises at least three plates 51, each plate 51 has a coupling hole 55 and each hole is coupled to a second fixing means 53.

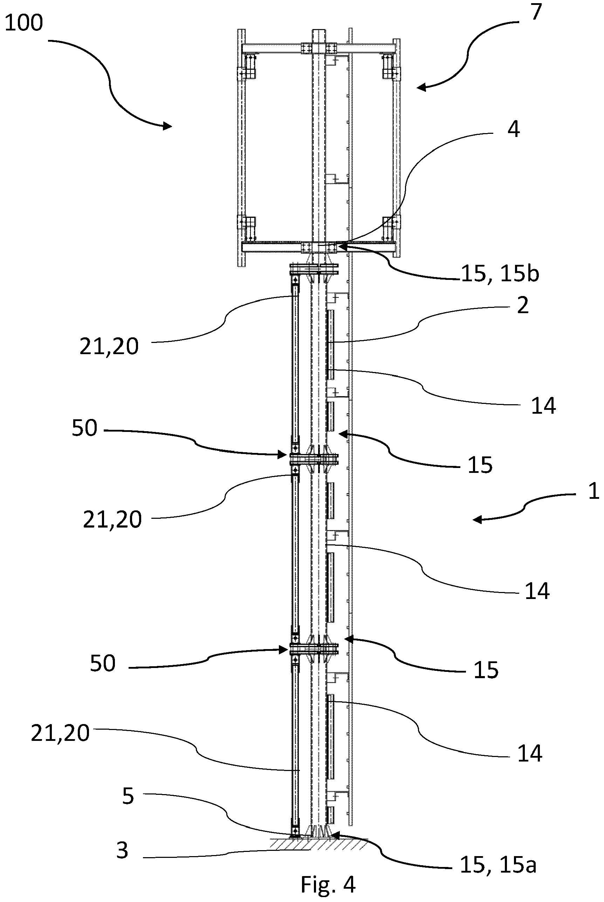

In a second example of an indirect connection relating to the present invention, reported in figures 4, 5c, 5d, 9a, 9b, 9c, 11, 12b, 12c and 13b, the second fixing means 53 comprise a plurality of retaining elements 31 fixed to the plates 51 by means of the at least one coupling hole 55. In particular, each retaining element 31 has a housing 33 configured to be coupled and retain one end of a rod 21a, 21b. According to the present embodiment, each flange 15 preferably comprises at least three retaining elements 31.

In particular, each retaining element 31, as shown in the figures X, comprises a base 32 configured to be coupled to a flange 15 and a housing 33 configured to be coupled to the end of a rod 21a, 21b.

The base 32 of the retaining element 31 has at least a plurality of holes 34 operatively associated with the coupling hole 55 of at least one plate 51, preferably through a system of bolts, not shown.

The housing 33 is defined by two walls 35 protruding from the base 31 along the longitudinal direction X-X and facing each other. The walls 35 each have a hole 36 in the same position.

In particular, the housing 33 is configured to be coupled to a tongue 22 having a hole 23 obtained at the free end 21a, 21b of each rod 21 according to the present embodiment. The tongue 22 is welded to the end 21a, 21b of the rod 21 or obtained in a single piece from the rod 21 itself.

More specifically, the perforated tongue 22 of a rod is inserted between the two walls 34 and fixed to the retaining element 31 preferably by means of a bolt, which couples the holes 36 of the walls 35 to the hole 23 of the tongue 22.

According to a preferred embodiment each connector 50 comprises at least three plates 51 and each plate 51 has a plurality of coupling holes 55.

The retaining elements 31 are connected to the plates 51 of the connectors 50 fixed to the same flange by means of the spacer elements 17.

According to the present embodiment, each spacer element 17 comprises a plurality of holes 17a configured to be aligned with the plurality of coupling holes 55 of the plates 51 facing one another and the plurality of holes 34 of the base 32 of the retaining element 31.

More specifically, a plurality of bolts, not shown, constrains the spacer element 17 and the second fixing means 53 to the plates 51.

In alternative embodiments, the groups of rods overlapping one another extend between the base element and an intermediate position, placed between the first and the second end. In other words, the groups of rods overlapping one another reach a height, which is less than the height H of the slimline structure. According to such embodiment the rods do not surround the second free end of the slimline structure.

In a further embodiment, which is not shown, the rods extend towards the first and the second end of the slimline structure in a continuous manner without interruptions for the entire height H of the slimline structure or for an intermediate height less than the height H.

In other words, each rod extends for a height equal to the height H of the slimline structure, alternatively, the rods extend between the first end of the slimline structure and an intermediate position, placed between the first and the second end.

According to embodiments, which are not shown, each connector retains a plurality of rods parallel to the slimline structure and at increasing distances from the structure itself.

Obviously, an expert skilled in the art, for the purpose of satisfying specific, contingent needs, can make numerous modifications to the variants described above, all contained within the scope of protection, as defined by the following claims.

## Claims

1. Connector (50) for fixing at least one group of rods (20) to a slimline structure (2), which develops along a longitudinal direction (X-X) comprising:
- at least two plates (51) fixable to the slimline structure (2), each plate (51) comprising fixing holes (54) and at least one coupling hole (55);
- first fixing means (52) operatively associated with the fixing holes (54) and configured to fix each plate (51) of the connector (50) stably to the slimline structure (2);
- second fixing means (53) operatively associated with the coupling holes (55) and with the rods (21) of the group of rods (20) and configured to keep the rods (21) angularly spaced apart, each second fixing means being configured to constrain one end of a rod (21a, 21b) to the plates (51) preventing translational movements of the rod along directions perpendicular to the longitudinal direction (X-X) and along the longitudinal direction itself. **characterised in that** said second fixing means (53) comprise:
- a plurality of threaded pins (40) coupled to the coupling holes (55) and extended along the longitudinal direction (X-X), each threaded pin (40) being inserted into a respective coupling hole (55) and having a central part (42) constrained to the plate (51) and two free ends (43) on opposite sides with respect to the plate (51);
- a plurality of sleeves (41) configured to connect the rods (21) to the connector (50) by means of the threaded pins (40), each sleeve (41) having a cavity (44), which is at least partially threaded, configured to be coupled to a free end (43) of each pin (40) and to one end of a rod (21a, 21b).

2. Connector (50) according to claim 1, **characterised in that** the cavity (44) of each sleeve (41), which is partially threaded, is configured to make a screw-nut coupling to the outer thread (24) at one end (21a, 21b) of a respective rod (21).

3. Connector (50) according to claim 2, **characterised in that** it comprises at least three plates (51), each plate (51) having a coupling hole (55), each coupling hole (55) being coupled to a second fixing means (53).

4. Connector (50) according to any one of the claims from 1 to 3, **characterised in that** the coupling holes (55) of the plates (51) are spaced apart from said slimline structure (2), said coupling holes (55) being configured to retain the rods (21) spaced apart from said slimline structure (2).

5. Connector (50) according to any one of the claims from 1 to 4, **characterised in that** the second fixing means (53) are fixed to the plates (51), angularly spaced apart, said second fixing means (53) being configured to retain the rods (21) angularly between one another around the slimline structure (2).

6. Connector (50) for fixing at least one group of rods (20) to a slimline structure (2), which develops along a longitudinal direction (X-X) comprising:
- at least two plates (51) fixable to the slimline structure (2), each plate (51) comprising fixing holes (54) and at least one coupling hole (55);
- first fixing means (52) operatively associated with the fixing holes (54) and configured to fix each plate (51) of the connector (50) stably to the slimline structure (2);
- second fixing means (53) operatively associated with the coupling holes (55) and with the rods (21) of the group of rods (20) and configured to keep the rods (21) angularly spaced apart, each second fixing means being configured to constrain one end of a rod (21a, 21b) to the plates (51) preventing translational movements of the rod along directions perpendicular to the longitudinal direction (X-X) and along the longitudinal direction itself; said second fixing means (53) comprising a plurality of retaining elements (31) fixed to the plates (51) by means of at least one coupling hole (55); each retaining element (31) having a housing (33) configured to be coupled and retain one end (21a, 21b) of a rod (21) **characterised in that** the retaining element (31) comprises:
- a base (32) fixed to at least one plate (51); said base (32) having a plurality of holes (34) operatively associated with the coupling hole (55) of at least one plate (51).
- two walls (35) protruding from the base (32) along the longitudinal direction (X-X), said walls (35) facing each other defining said housing (33).

7. Connector (50) according to claim 6 **characterised in that** each housing (33) is configured to be coupled to a tongue (22) obtained at the end (21a, 21b) of a rod (21) by means of at least one bolt.

8. Connector (50) according to claims 6 and 7, **characterised in that** it comprises at least three plates (51) each having a plurality of coupling holes (55) configured to be coupled to the holes of the base (32) of each retaining element (31).

9. Connector (50) according to any one of the claims from 6 to 8, **characterised in that** the coupling holes (55) of the plates (51) are spaced apart from said slimline structure (2), said coupling holes (55) being configured to retain the rods (21) spaced apart from said slimline structure (2).

10. Connector (50) according to any one of the claims from 6 to 9, **characterised in that** the second fixing means (53) are fixed to the plates (51), angularly spaced apart, said second fixing means (53) being configured to retain the rods (21) angularly between one another around the slimline structure (2).

11. Reinforcement system (100) for aerial support poles comprising:
- a support apparatus (1),
- at least one group or rods (20),
- a plurality of connectors (55) according to any one of the claims from 1 to 5 stably fixed to the support apparatus (1);
wherein the support apparatus (1) comprises:
- a base element (3);
- a slimline structure (2), which develops along a longitudinal direction (X-X) substantially perpendicular to the base element (3) between a first free end (4) and a second end (5), opposite the first end (4) and rigidly constrained to the base element (3), and which comprises a plurality of flanges (15) arranged longitudinally spaced apart along the slimline structure (2); each flange (15) having a plurality of through holes (16);
- at least one support device (7) mounted at the first end (4) and configured to sustain one or more aerials;
**characterised in that** each connector (50) is stably constrained to at least one flange (15) of the slimline structure (2) by means of the first fixing means (52)
**and in that** the connectors (50) connect groups of rods (20) overlapping one another between the first end (4) and the second end (5) of the slimline structure (2) along the longitudinal direction (X-X).

12. Reinforcement system (100) for aerial support poles comprising:
- a support apparatus (1),
- at least one group or rods (20),
- a plurality of connectors (55) according to any one of the claims from 6 to 10 stably fixed to the support apparatus (1);
wherein the support apparatus (1) comprises:
- a base element (3);
- a slimline structure (2), which develops along a longitudinal direction (X-X) substantially perpendicular to the base element (3) between a first free end (4) and a second end (5), opposite the first end (4) and rigidly constrained to the base element (3), and which comprises a plurality of flanges (15) arranged longitudinally spaced apart along the slimline structure (2); each flange (15) having a plurality of through holes (16);
- at least one support device (7) mounted at the first end (4) and configured to sustain one or more aerials;
**characterised in that** each connector (50) is stably constrained to at least one flange (15) of the slimline structure (2) by means of the first fixing means (52)
**and in that** the connectors (50) connect groups of rods (20) overlapping one another between the first end (4) and the second end (5) of the slimline structure (2) along the longitudinal direction (X-X).
